# EUROPEAN PATENT SPECIFICATION

(11) **EP 0 951 815 B1**
(45) Date of publication and mention of the grant of the patent: **12.11.2003**
(21) Application number: 99114120.1
(22) Date of filing: 25.04.1995
(51) Int. Cl.: A01D 34/52

(54) **Flail cutter for brush cutting maching**
Schlegelmäher für Buschmäher
Faucheuse à fléaux pour débroussailleuse

(30) Priority: 28.04.1994 US 234670; 29.04.1994 US 235558; 14.11.1994 US 338254; 17.11.1994 US 341019
(43) Date of publication of application: 27.10.1999
(62) Divisional of application: 95916760.2
(73) Proprietor: Dallman, Jimmie Jay, Everett, WA 98205 (US)
(72) Inventor: Dallman, Jimmie Jay, Everett, WA 98205 (US)
(74) Representative: Brown, David Leslie

(56) References cited:
- DE-B- 1 215 999
- FR-A- 1 487 198
- FR-A- 2 370 420
- FR-A- 2 456 554
- GB-A- 1 144 611
- US-A- 3 402 541
- US-A- 3 423 920
- US-A- 3 608 842
- US-A- 3 657 869
- US-A- 3 698 168
- US-A- 4 241 568

## Description

The present invention relates to apparatus and methods for cutting brush vegetation. More particularly, the invention provides a flail cutter and a method of providing a flail cutter for a brush cutting machine.

A flail cutter is generally a shaft type cutter having a plurality of hangers welded around the outside perimeter of the shaft. A plurality of small blades are hooked onto the hangers by means of a bolt positioned through a pair of hangers, the bolt holding a ring which in turn holds a pair of blades. As the shaft is rotated and carried over the ground on a roller or skid shoes, the blades slash into the brush to be cut.

A problem with the conventional prior art flail cutter is that it takes a very long time to replace these blades on the flail cutter. In the prior art, since each pair of blades is held in place by a pin or bolt, in order to change all the blades, scores of pins or bolts must be removed. This becomes very tedious as while the blades are in use, the nuts for the pins or bolts have become peened to a round shape and the pins or bolts have become bent. A socket wench does not work on these domed nuts so what would have been an arduous task becomes worsened by the time and effort spent trying to remove the damaged nuts and bots that attach the blades to the shaft. The prior art also typically uses a V-belt drive system to power and rotate the shaft. These V-belts have a tendency to slip and/or break which causes much down time for the brush cutting machine and the operator.

US Patent 2,669,819 to Sawyer discloses a stalk shredder with hammers having independent lateral deflection to reduce breakage of the hammers.

US Patent 2,711,067 to Mott discloses a flail mower with the blades hung on C-rings.

US Patent 3,004,765 to Wilkes discloses beater chains that extend through holes in a cylindrical sleeve. A rod is located in the center of the sleeve.

US Patent 3,161,412 to Ferris discloses a spreader with flails driven by a tube that has notches that are engaged by clutch pins extending from a central shaft.

US Patent 3,167,318 to Ferris teaches flexible flails extending from a shaft and through a tube. The flexible flails are in the form of chains that are wound around the shaft, the chains unwinding during unloading of material.

US Patent 4,587,800 to Jimenez discloses a grass trimming and edging device which allows the motor to be mounted in two positions, one to present the cutting element in a substantially vertical plane and one to present the cutting element in a substantially horizontal plane.

FR-A-2 370 420 discloses a flail cutter comprising a rotatable cylindrical member, a plurality of one piece attaching means attached to the cylindrical member and a plurality of holding means removably attached to the attaching means, each holding blades.

In order to overcome or at least alleviate problems inherent in the prior art there is provided an improved flail cutter for a brush cutting machine. Unlike the prior art, the flail cutter does not use any pins or bolts to hold the plurality of blades in place on the shaft. The flail cutter of the present invention uses a locking means in the form of an outer cylinder that is positioned over a long steel shaft to lock the blades in place.

In the present invention, hangers are inserted into mating holes cut in the long steel shaft and through a second plurality of mating holes in the outer cylinder. The hangers of the present invention are designed to receive a ring which holds a pair of blades back to back. The hangers are inserted into the holes in the outer cylinder and the shaft. After all the blades are installed on the hangers with the rings, the cylinder is slid across the long shaft, the cylinder having a very close inside and outside diameter tolerance with the shaft. This outer cylinder or sheath serves as the locking means for the blades. The sheath slides back and forth horizontally across the inner shaft. When the sheath is slid in one direction, the blades are locked in place and in the opposite direction the blades are released. So that after all the blades are installed on the hangers with the rings thereby attaching the blades to the shaft, the outer sheath is slid, thus locking all the blades in place. This results in a much quicker attachment of the blades as they become dulled thereby greatly decreasing maintenance time and expense. The plurality of blades can thus be changed in minimal time on the flail cutter of the present invention.

The flail cutter of the present invention also uses a chain drive system instead of a V-belt drive system employed by the prior art. Unlike the prior art, the chain drive system used with the present flail cutter does not use belts that can clip and/or break thereby increasing maintenance time and expense. The hydraulic motor used to power the flail cutter of the present invention is mounted on the housing of the chain drive system. This housing and hence the hydraulic motor is removable from the flail cutter so as to provide easy maintenance on the motor, sprockets and chain. It can also be removed and mounted on other flail cutters as an emergency replacement part. The housing of the chain drive system of the flail cutter is designed to provide an oil bath for the chain and sprocket to run in. This is accomplished by seals around both the motor shaft and the axle of the flail cutter and a gasket between the chain drive cover and the housing.

The aspect of the invention described above is defined in the appended claims. Specific features of those claims are noted and elaborated in the following statements (a) to (x):
(a) The flail cutter for a brush cutting machine as defined in claim 3 may be such that the plurality of attaching means are U-shaped hangers.
(b) The flail cutter for a brush cutting machine as defined may be such that the plurality of holding means are C-shaped rings.
(c) The flail cutter for a brush cutting machine as defined in claim 4 may be such that the plurality of first receiving means are holes positioned through the generally cylindrical member.
(d) The flail cutter for a brush cutting machine as defined may be such that wherein the plurality of second receiving means are holes positioned through the locking means.
(e) The flail cutter for a brush cutting machine as defined may be such that the attaching means are removably attached to the first and second receiving means.
(f) The flail cutter for a brush cutting machine as defined may be such that the locking means is a slidable sheath to slide over the generally cylindrical member to thereby lock the blades in place attached to the generally cylindrical member.
(g) The flail cutter for a brush cutting machine as defined may be such that the generally cylindrical member is powered by means of a chain drive system.
(h) The flail cutter for a brush cutting machine as defined may be such that the holes of the plurality of first receiving means are generally L-shaped; and whereby the L-shaped holes of the plurality of first receiving means receive the attaching means in removable engagement.
(i) The flail cutter for a brush cutting machine as defined may be such that the holes of the plurality of second receiving means are generally L-shaped; and whereby the L-shaped holes of the plurality of second receiving means receive the attaching means in removable engagement.
(j) The flail cutter for a brush cutting machine as defined may be such that the attaching means are hangers, each hanger having a first and second ends, the hangers each removably attached to one of the first and second receiving means at the first end, the hangers each attached to one of the holding means at the second end thereby holding a blade at the second end.
(k) The flail cutter for a brush cutting machine as defined may be such that the hangers are removably inserted into the first and second receiving means and wherein the holding means is in the form of a C ring.
(l) The flail cutter for a brush cutting machine as defined may be such that the attaching means are hangers, the hangers each having a first and second ends, the hangers each removably inserted into one of the first and second receiving means at the first end, the hangers each attached to one of the holding means at the second end thereby holding a blade at the second end.
(m) The flail cutter for a brush cutting machine as defined may be such that the chain drive system is portable and removable from the flail cutter.
(n) The method of providing a flail cutter for a brush cutting machine as defined in claim 5 may be such that the plurality of first receiving means are holes positioned through the generally cylindrical member.
(o) The method of providing a flail cutter for a brush cutting machine as defined may be such that the plurality of second receiving means are holes positioned through the locking means.
(p) The method of providing a flail cutter for a brush cutting machine as defined may be such that the attaching means are removably attached to the first and second receiving means.
(q) The method of providing a flail cutter for a brush cutting machine as defined may be such that the locking means is a slidable sheath to slide over the generally cylindrical member to thereby lock the blades in place attached to the generally cylindrical member.
(r) The method of providing a flail cutter for a brush cutting machine as defined may be such that wherein the generally cylindrical member is powered by means of a chain drive system.
(s) The method of providing a flail cutter for a brush cutting machine as defined may be such that wherein the holes of the plurality of first receiving means are generally L-shaped; and whereby the L-shaped holes of the plurality of first receiving means receive the attaching means in removable engagement.
(t) The method of providing a flail cutter for a brush. cutting machine as defined may be such that the holes of the plurality of second receiving means are generally L-shaped; and whereby the L-shaped holes of the plurality of second receiving means receive the attaching means in removable engagement.
(u) The method of providing a flail cutter for a brush cutting machine as defined may be such that the attaching means are hangers, the hangers each having a first and second ends, the hangers each removably attached to one of the first and second receiving means at the first end, the hangers each attached to one of the holding means at the second end thereby holding a blade at the second end.
(v) The method of providing a flail cutter for a brush cutting machine as defined may be such that wherein the hangers are removably inserted into the first and second receiving means and wherein the holding means is in the form of a C clip.
(w) The method of providing a flail cutter for a brush cutting machine as defined may be such that the attaching means are hangers, the hangers each having a first and second ends, the hangers each removably inserted into one of the first and second receiving means at the first end, the hangers each attached to one of the holding means at the second end thereby holding a blade at the second end.
(x) The method of providing a flail cutter for a brush cutting machine as defined may be such that the chain drive system is portable and removable from the flail cutter.

For ease of understanding of the invention, and to illustrate how the same may be put into effect, embodiments will now be described, purely by way of example and without limitation, with reference to the accompanying drawings.

Figure. 1 is a front perspective view showing how the flail cutter of a first preferred embodiment of the second aspect of the present invention is attached to an existing brush cutting machine.

Figure 2 is a front perspective view of the flail cutter of the present invention having a cut out portion showing how the blades are attached to the flail cutter in the present invention.

Figure 3 is an exploded isometric view of the flail cutter of the present invention showing also how the blades are attached to the flail cutter of the present invention.

Figure 4 is an enlarged exploded isometric view of the flail cutter of the present invention showing how the blades are easily attached to the shaft of the flail cutter and showing the blades before they are locked into place by the locking sheath of the present invention.

Figure 5 is an enlarged exploded isometric view of the flail cutter of the present invention showing how the blades have been easily attached to the shaft of the flail cutter and showing the blades after they have been locked into place by the locking sheath of the present invention.

Figure 6 is a cross-sectional view taken through line 6-6 of Figure 4 showing how the blades are attached to the shaft of the flail cutter of the present invention before the blades have been locked into place by the locking sheath of the present invention.

Figure 7 is a cross-sectional view taken through line 7-7 of Figure 5 showing how the blades have been attached to the shaft of the flail cutter of the present invention after the blades have been locked into place by the locking sheath of the present invention.

Figure 8 is an enlarged exploded isometric view showing in greater detail the chain drive system that powers and rotates the shaft of the flail cutter of the present invention.

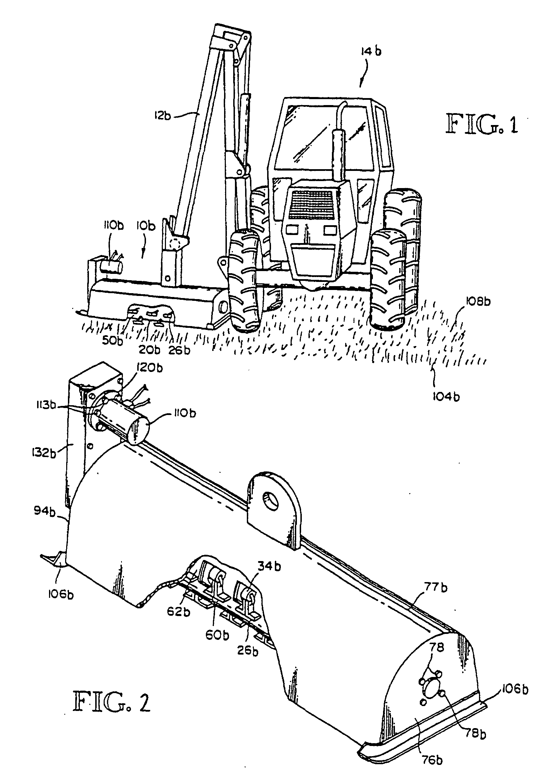

Referring now to figures 1 to 7 of the drawings, and firstly to Figure 1 of the drawings, there is shown a front perspective view of how the flail cutter of the present invention is attached to a conventional brush cutting machine. The flail cutter of the present invention is shown generally by the number 10b. The flail cutter 10b is attached to the boom 12b of a tractor 14b by the attaching plate 15b positioned on the flail cutter 10b as seen in Figure 2.

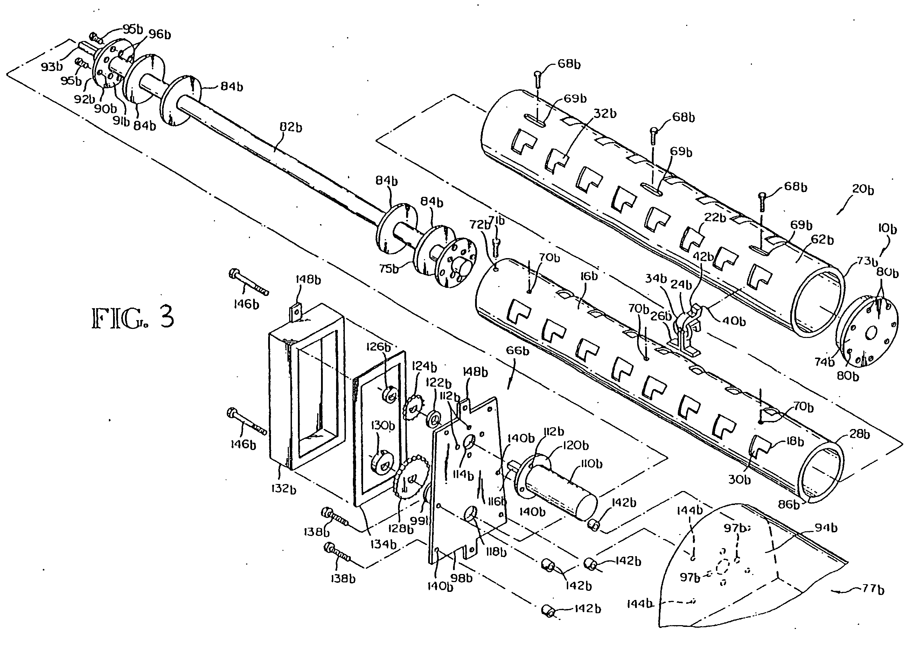

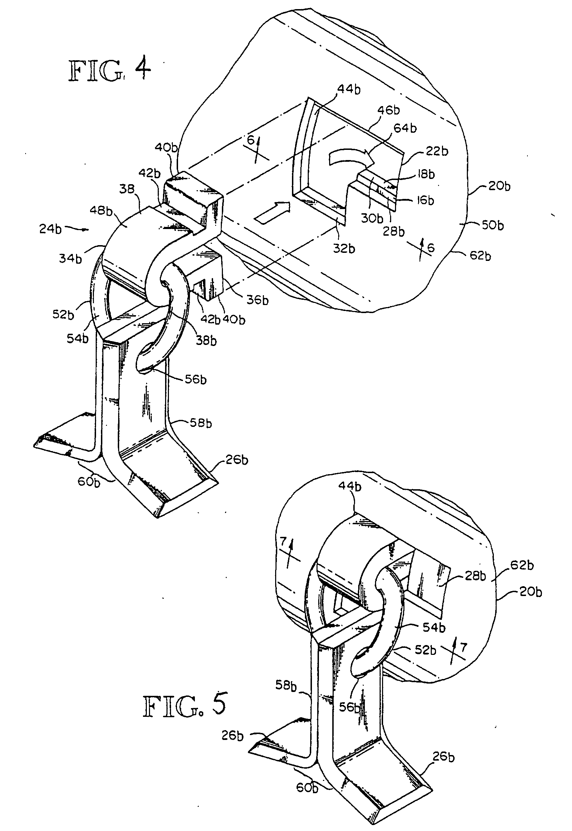

As seen most clearly in Figures 3 and 4, the flail cutter 10b generally comprises a generally cylindrical member 16b, the generally cylindrical member 16b having a plurality of first receiving means 18b positioned thereon. A locking means 20b having a plurality of second receiving means 22b positioned thereon is positioned over the generally cylindrical member 16b whereby the plurality of first receiving means 18b line up with the plurality of second receiving means 22b as seen most clearly in Figure 4. Each of the first receiving means 18b and the second receiving means 22b has one of a plurality of attaching means 24b attached thereto. At least one of a plurality of blades 26b is attached to one of the attaching means 24b. The second plurality of receiving means 22b on the locking means 20b is positioned over the first plurality of receiving means 18b on the cylinder 16b to thereby lock the blades 26b in attached engagement to the generally cylindrical member 16b.

In the preferred embodiment of this aspect of the present invention, the generally cylindrical member 16b is in the form of a shaft 28b. As seen most clearly in Figure 3, the plurality of first receiving means 18b are in the form of generally L-shaped holes 30b positioned through the shaft 28b. The plurality of second receiving means 22b on the locking means 20b are lined up with the plurality of first receiving means 18b and are also generally L-shaped holes 32b. The plurality of attaching means 24b are in the form of generally U-shaped hangers 34b. On each of the U-shaped hangers 34b, at the top 36b of both sides 38b of the U-shape there are protrusions 40b as seen most clearly in Figure 4. Directly under the two protrusions 40b are two notches 42b. Each of these two protrusions 40b is adapted to fit in locking engagement with the two sides 44b of the top 46b of the upside-down L-shaped hole 30b in the shaft 28b as seen in Figures 3 and 4. The shaft 28b slides into the notches 42b on the hangers 34b and the locking means 20b slides over the thicker part 48b on both sides 38b of the U-shaped hanger 34b. In this way, each of the plurality of hangers 34b is inserted through a mating L-shaped hole 32b through the outside perimeter 50b of the locking means 20b and through another mating L-shaped hole 30b in the shaft 28b also as seen in Figures 3 and 4. In operation, when it is desired to change any or all of the flail blades 26b in a quick and simple fashion, the hangers 34b are slid out of their locked engagement in the mating L-shapes holes 30b and 32b. As best seen in Figure 4, a holding means 52b in the form of a C-shaped ring 54b which is known in the art, is positioned through an attaching hole 56b in the stem 58b of the blade 26b whereby a pair of blades 60b are positioned back to back on the C-shaped ring 54b. The U-shaped hanger 34b is then positioned onto the combination of the C ring 54b and the pair of blades 60b, the C-shaped ring 54b serving to hold the blades 26b on the U-shaped hanger 34b. The U-shaped hanger 34b with the C ring 54b and the blades 26b attached, is then slid back into engagement with the protrusions 40b on the U-shaped hanger 34b fitting snugly into the two sides 44b of the top 46b of the upside down L-shaped hole 30b in the shaft 28b as described earlier. The purpose of the C-shaped ring 54b is to allow the pair of blades 60b to flail freely from the hanger 34b and to position the pair of blades 60b perpendicular to the hanger 34b so that the blades 26b are facing forwardly in the proper cutting position. When each of the hangers 34b has been inserted into each of the holes 30b in the shaft 28b and each of the holes 32b in the locking means 20b, with the locking means 20b positioned over the shaft 28b; the pairs of blades 60b on the C ring 54b inserted through the hangers 34b has thereby attached the blades 26b to the shaft 28b. In the preferred embodiment of this aspect of the present invention, the locking means 20b is in the form of a slidable sheath 62b. The slidable sheath 62b is designed to have a very close inside and outside diameter tolerance with the shaft 28b and further to slide back and forth horizontally across the shaft 28b. When the sheath 62b is slid in either horizontal direction across the shaft 28b, the blades 26b as they are attached to the shaft 28b as described earlier, are all locked in place. As the sheath 62b is slid in the opposite horizontal direction across the shaft 28b, the blades 26b are released. For purposes of illustration, in Figure 4, there is shown an enlarged exploded isometric view with motion arrows 64b showing the motion of the sheath 62b across the shaft 28b and showing how the blades 26b have been inserted into the C rings 54b, hangers 34b, holes 32b on the outside perimeter 50b of the sheath 62b and holes 30b in the shaft 28b before the blades 26b have been locked in place by the locking sheath 62b. If the locking sheath 62b then is slid across the shaft 28b in the direction of the motion arrows 64b as shown in Figure 4 then the blades 26b will be locked in place as shown in the enlarged exploded isometric view of Figure 5. It is to be understood that Figures 4 and 5 are illustrative only and if the sheath 62b were to be slid across the shaft 28b in the horizontal direction opposite the motion arrows 64b in Figure 4 to unlock the blades 26b, then the sheath 62b could be slid in the direction of the motion arrows 64b to lock the blades 26b into position. In other words, the directions the sheath 62b is slid in to lock and unlock the blades 26b are interchangeable.

Referring now to Figure 3 of the drawings there is shown an exploded isometric view of the flail cutter 10b of the present invention showing how the blades 26b are attached to the flail cutter 10b of the present invention and showing the chain drive system 66b that powers the shaft 28b of the present invention as will be described in greater detail later. Figure 3 shows the locking sheath 62b as it is positioned over the rotatable shaft 28b of the present invention. The locking sheath 62b is attached to the shaft 28b by means of the bolts 68b but can be attached by any suitable means. The bolts 68b are inserted through the slots 69b in the locking sheath 62b and through the holes 70b in the shaft 28b. After the locking sheath 62b has been slid into the locked position as described previously, the locking bolt 71b is inserted into the hole 72b and secures the locking sheath 62b in place.

Positioned near one end 73b of the locking sheath 62b is a false end 74b. This false end 74b secures a first hub 75b to the end 76b of the cover or shroud 77b of the flail cutter 10b as seen in Figure 2. When removed, this false end 74b allows the shaft 28b and the locking sheath 62b to be removed out through the end 76b of the flail cutter shroud 77b. The first hub 75b has within a plurality of bearings (not shown), as known in the art- and as may be used in a standard trailer axle housing. Four bolts 78b are positioned through four mating holes 80b in the false end 74b to attach the false end 74b to the shroud 77b of the flail cutter 10b as seen in Figure 2. The first hub 75b is attached to the cutter axle 82b and to the false end 74b. Within the shaft 28b is the axle 82b, the axle 82b having four plugs 84b positioned thereon. The plugs 84b are welded to the inside of the shaft 28b, the plugs 84b having the same diameter as the inside diameter 86b of the shaft 28b to hold everything tightly in place inside the shaft 28b. At the end 88b of the combination shaft and locking sheath 62b opposite to the end 73b of the combination shaft 28b and locking sheath 62b near the first hub 75b there is a second hub 90b, the second hub 90b being attached on one side 91b to the axle 82b and on the second side 92b to the cutter shaft 93b, the cutter shaft 93b serving to rotate the shaft 28b by means of the chain drive system 66b. The second hub 90b also has a plurality of bearings within (not shown) similar to the first hub 75b. The second hub 90b is attached to the end 94b of the shroud 77b opposite to the end 76b of the shroud 77b that carries the false end 74b. The second hub 90b is attached to the end 94b of the shroud 77b by four bolts 95b positioned through four holes 96b in the second hub 90b and four tapped mating holes 97b in the end 94b of the shroud 77b. The cutter shaft 93b is positioned through the chain drive housing 98b and seal 99b of the chain drive system 66b as shown by the dashed line in Figure 3, the chain drive system 66b to be described in greater detail hereinafter.

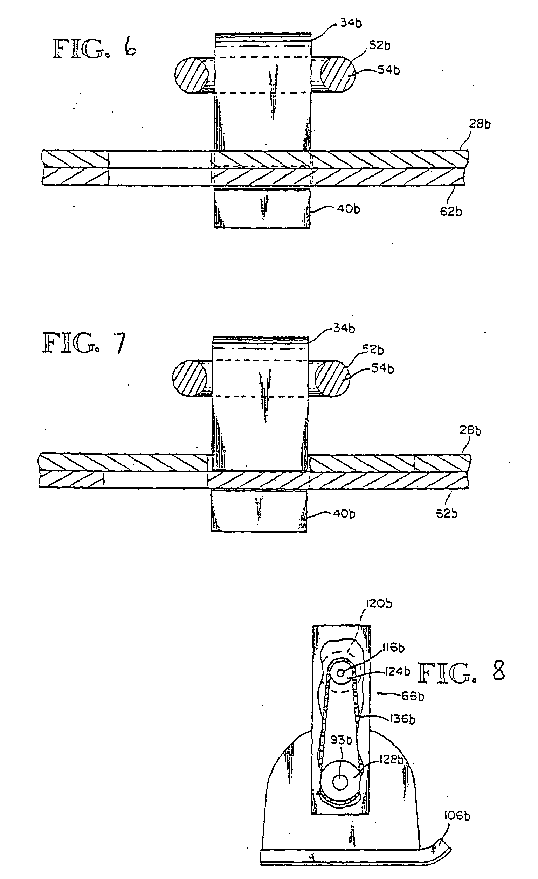

In operation, the flail cutter 10b of the present invention is powered and caused to rotate near the ground 104b as seen in Figure 1 by means of a chain drive system shown generally by the number 66b as shown in Figure 3 and in Figure 8. As the shaft 28b is rotated and carried over the ground 104b on skid shoes 106b or a roller (not shown), the rotation of the shaft 28b of the flail cutter 10b causes the blades 26b to slash into the brush 108b to be cut as seen also in Figure 1. The prior art generally uses a V-belt system to rotate the flail cutter. As these belts turn, they are caused to slip and/or break; in both instances resulting in down time for the machine and operator and resultant excess maintenance time and expense. To the contrary, the flail cutter 10b of the present invention is powered by the chain drive system 66b as shown most clearly in Figure 3 and in Figure 8. In the chain drive system 66b of the present invention the hydraulic motor 110b for the flail cutter 10b is removably mounted or bolted on the chain drive housing 98b, the chain drive housing 98b having a first hole 114b for receiving the motor shaft 116b and a second hole 118b for receiving the cutter shaft 93b. Attached to and integral with the hydraulic motor 110b is a pad or flange 120b for the motor 110b. The motor shaft 116b is positioned through the housing 98b, a seal 122b, a sprocket 124b and a locking ring 126b for locking the sprocket 124b on the motor shaft 116b. Mating holes 112b on the chain drive housing 98b match up to mating holes 112b on the flange 120b wherein the hydraulic motor 110b is bolted to the chain drive housing 98b through the mating holes 112b. The bolts 113b positioned through the flange 120b and the chain drive housing 98b are seen in Figure 2. As described previously with reference to Figure 3, the cutter shaft 93b is positioned as shown by the dashed lines in Figure 3 through the hole 118b in the chain drive housing 98b, a seal 99b, a sprocket 128b and a locking ring 130b for locking the sprocket 128b onto the cutter shaft 93b. Positioned between the chain drive housing 98b and a cover 132b for the chain drive system 66b is a gasket 134b. The chain drive system 66b is removable from the flail cutter 10b so as to provide easy maintenance on the motor 110b, sprockets 124b and 128b and chain 136b as seen also in Figures 3 and 8. The chain drive system 66b for the flail cutter 10b is removably mounted to the end 94b of the shroud 77b opposite the first end 76b of the shroud 77b of the flail cutter 10b by means of four bolts 138b positioned through four holes 140b in the chain drive housing 98b, four spacers 142b and four tapped mating holes 144b in the end 94b of the shroud 77b. It can also be removed and mounted on other flail cutter as an emergency replacement part. The chain drive housing 98b is also designed to provide an oil bath for the chain 136b as seen in Figure 8 and sprockets 124b and 128b to run in. This is accomplished by providing the seals 99b and 122b around both the motor shaft 116b and the cutter shaft 93b; and the gasket 134b that is positioned between the cover 132b of the chain drive system 66b and the chain drive housing 98b. Bolts 146b are inserted through tapped winged tabs 148b to hold the cover 132b in place on the chain drive system 66b. In operation, as the tractor 14b is started and the flail cutter 10b is lowered close to the ground 104b by the boom 12b of the tractor 14b as seen in Figure 1 the chain drive system 66b transfers the power provided by the hydraulic motor 110b of the flail cutter 10b to the cutter shaft 93b. Spinning the cutter shaft 93b at high revolutions per minute gives a flailing motion to the blades 26b.

From the foregoing it can be seen that the applicant's invention provides an improved flail cutter for a brush cutting machine that uses a removable attaching arrangement for attaching the numerous flail blades to the rotating shaft that turns to present the blades to the brush to be cut. A locking means also insures that all the blades are held tightly in place after they have been attached to the shaft. In this way, what had been a tedious and time consuming job in the prior art has been eliminated. The flail cutter for a brush cutting machine of the present invention also powers and rotates the shaft by means of a chain drive system to provide a less maintenance intensive power system for the flail cutter.

## Claims

1. A flail cutter (10b) for a brush cutting machine, the flail cutter (10b) having blades (26b) and comprising:
a) a rotatable generally cylindrical member (16b) having a plurality of first receiving means (18b) positioned thereon;
b) a locking means (20b) having a plurality of second receiving means (22b) positioned thereon, the plurality of second receiving means (22b) positioned over the plurality of first receiving means (18b);
c) a plurality of attaching means (24b), each attaching means (24b) attached to one of the first and second receiving means; and
d) a plurality of holding means (52b), each holding means (52b) removably attached to one of the attaching means (24b), each holding means (52b) holding at least one blade (26b), each holding means (52b) thereby attaching at least one blade (26b) to each of the attaching means (24b).

2. A flail cutter (10b) for a brush cutting machine according to claim 1, wherein the plurality of attaching means (24b) are U-shaped hangers (24b).

3. A flail cutter (10b) for a brush cutting machine according to claim 1 or claim 2, wherein the plurality of holding means (52b) are C-shaped rings (54b).

4. A flail cutter (10b) for a brush cutting machine according to any one of claims 1-3 wherein the plurality of first receiving means (18b) are holes positioned through the generally cylindrical member (16b).

5. A flail cutter (10b) for a brush cutting machine according to any preceding claim, wherein the plurality of second receiving means (22b) are holes positioned through the locking means (20b).

6. A flail cutter (10b) for a brush cutting machine according to any preceding claim, wherein the attaching means (24b) are removably attached to the first and second receiving means (18b, 22b).

7. A flail cutter (10b) for a brush cutting machine according to any preceding claim, wherein the locking means (20b) is a slidable sheath to slide over the generally cylindrical member (16b) to thereby lock the blades (26b) in place attached to the generally cylindrical member (16b).

8. A flail cutter (10b) for a brush cutting machine according to any preceding claim, wherein the generally cylindrical member (16b) is powered by means of a chain drive system (66b).

9. A flail cutter (10b) for a brush cutting machine according to claim 4, wherein the holes of the plurality of first receiving means (18b) are generally L-shaped; and whereby the L-shaped holes of the plurality of first receiving means (18b) receive the attaching means (24b) in removable engagement.

10. A flail cutter (10b) for a brush cutting machine according to claim 5, wherein the holes of the plurality of second receiving means (22b) are generally L-shaped; and whereby the L-shaped holes of the plurality of second receiving means (22b) receive the attaching means (24b) in removable engagement.

11. A flail cutter (10b) for a brush cutting machine according to any preceding claim, wherein the attaching means (24b) are hangers (34b), each hanger (34b) having a first and second ends, the hangers (34b) each removably attached to one of the first and second receiving means (18b, 22b) at the first end, the hangers (34b) each attached to one of the holding means (52b) at the second end thereby holding a blade (26b) at the second end.

12. A flail cutter (10b) for a brush cutting machine according to claim 11, wherein the hangers (34b) are removably inserted into the first and second receiving means (18b, 22b) and wherein the holding means (52b) is in the form of a C ring (54b).

13. A flail cutter (10b) for a brush cutting machine according to any one of claims 1-10, wherein the attaching means (24b) are hangers (34b), the hangers 934b) each having a first and second ends, the hangers (34b) each removably inserted into one of the first and second receiving means (18b, 22b) at the first end, the hangers (34b) each attached to one of the holding means (52b) at the second end thereby holding a blade (26b) at the second end.

14. A flail cutter (10b) for a brush cutting machine according to claim 8, wherein the chain drive system (66b) is portable and removable from the flail cutter (10b).

15. A method for providing a flail cutter (10b) for a brush cutting machine, the flail cutter (10b) having blades (26b), comprising the steps of:
a) providing a rotatable generally cylindrical member (16b) having a plurality of first receiving means (18b) positioned thereon;
b) providing a locking means (20b) having a plurality of second receiving means (22b) positioned thereon, the plurality of second receiving means (22b) positioned over the plurality of first receiving means (18b);
c) providing a plurality of attaching means (24b);
d) attaching each attaching means (24b) to one of the first and second receiving means (18b, 22b);
e) providing a holding means (52b); and
f) removably attaching each of the attaching means (24b) to one of the holding means (52b), each holding means (52b) holding at least one blade (26b), each holding means (52b) thereby attaching at least one blade (26b) to each of the attaching means (24b).

## Patentansprüche

1. Schlegelmäher (10b) für einen Buschmäher, wobei der Schlegelmäher (10b) Messer (26b) hat und Folgendes aufweist:
a) ein drehbares allgemein zylindrisches Element (16b) mit einer Mehrzahl daran angeordneter erster Aufnahmemittel (18b);
b) ein Verriegelungsmittel (20b) mit einer Mehrzahl zweiter daran angeordneter Aufnahmemittel (22b), wobei die Mehrzahl zweiter Aufnahmemittel (22b) über der Mehrzahl der ersten Aufnahmemittel (18b) angeordnet ist;
c) eine Mehrzahl Befestigungsmittel (24b), wobei jedes Befestigungsmittel (24b) an einem der ersten und zweiten Aufnahmemittel befestigt ist; und
d) eine Mehrzahl Haltemittel (52b), wobei jedes Haltemittel (52b) lösbar an einem der Befestigungsmittel (24b) angebracht ist, jedes Haltemittel (52b) mindestens ein Messer (26b) hält, so dass jedes Haltemittels (52b) das mindestens eine Messer (26b) an jedem der Befestigungsmittel (24b) befestigt.

2. Schlegelmäher (10b) für einen Buschmäher nach Anspruch 1, bei dem die Mehrzahl Befestigungsmittel (24b) U-förmige Aufhängungen (24b) sind.

3. Schlegelmäher (10b) für einen Buschmäher nach Anspruch 1 oder 2, bei dem die Mehrzahl Haltemittel (52b) C-förmige Ringe (54b) sind.

4. Schlegelmäher (10b) für einen Buschmäher nach einem der Ansprüche 1 bis 3, bei dem die Mehrzahl erster Aufnahmemittel (18b) im allgemein zylindrischen Element (16b) angeordnete Durchgangsbohrungen sind.

5. Schlegelmäher (10b) für einen Buschmäher nach einem der vorhergehenden Ansprüche, bei dem die Mehrzahl zweiter Aufnahmeelemente (22b) im Verriegelungsmittel (20b) angeordnete Durchgangsbohrungen sind.

6. Schlegelmäher (10b) für einen Buschmäher nach einem der vorstehenden Ansprüche, bei dem die Befestigungsmittel (24b) lösbar an den ersten und zweiten Aufnahmemitteln (18b, 22b) angebracht sind.

7. Schlegelmäher (10b) für einen Buschmäher nach einem der vorstehenden Ansprüche, bei dem das Verriegelungsmittel (20b) ein verschiebbares Hüllrohr ist, das über das allgemein zylindrische Element (16b) geschoben werden kann, um dadurch die am allgemein zylindrischen Element (16b) angebrachten Messer (26b) in ihrer Lage zu verriegeln.

8. Schlegelmäher (10b) für einen Buschmäher nach einem der vorstehenden Ansprüche, bei dem das allgemein zylindrische Element (16b) von einem Kettenantriebssystem (66b) angetrieben wird.

9. Schlegelmäher (10b) für einen Buschmäher nach Anspruch 4, bei dem die Bohrungen der Mehrzahl erster Aufnahmemittel (18b) allgemein L-förmig sind, und bei dem die L-förmigen Bohrungen der Mehrzahl erster Aufnahmemittel (18b) die Befestigungsmittel (24b) in lösbarem Eingriff aufnehmen.

10. Schlegelmäher (10b) für einen Buschmäher nach Anspruch 5, bei dem die Bohrungen der Mehrzahl zweiter Aufnahmemittel (22b) allgemein L-förmig sind, und bei dem die L-förmigen Bohrungen der Mehrzahl zweiter Aufnahmemittel (22b) die Befestigungsmittel (24b) in lösbarem Eingriff aufnehmen.

11. Schlegelmäher (10b) für einen Buschmäher nach einem der vorstehenden Ansprüche, bei dem die Befestigungsmittel (24b) Aufhängungen (34b) sind, wobei jede Aufhängung (34b) ein erstes und ein zweites Ende hat, die Aufhängungen (34b) jeweils lösbar mit dem ersten Ende an einem der ersten und zweiten Aufnahmemittel (18b, 22b) angebracht sind und die Aufhängungen (34b) jeweils mit dem zweiten Ende an einem der Haltemittel (52b) angebracht sind und dadurch am zweiten Ende ein Messer (26b) halten.

12. Schlegelmäher (10b) für einen Buschmäher nach Anspruch 11, bei dem die Aufhängungen (34b) lösbar in den ersten und zweiten Aufnahmemitteln (18b, 22b) eingeführt sind, und bei dem die Haltemittel (52b) C-förmige Ringe (54b) sind.

13. Schlegelmäher (10b) für einen Buschmäher nach einem der Ansprüche 1 bis 10, bei dem die Befestigungsmittel (24b) Aufhängungen (34b) sind, wobei jede Aufhängung (34b) ein erstes und ein zweites Ende hat, die Aufhängungen (34b) jeweils lösbar mit dem ersten Ende in eine der ersten und zweiten Aufnahmemittel (18b, 22b) eingeführt sind und die Aufhängungen (34b) jeweils mit dem zweiten Ende an einem der Haltemittel (52b) angebracht sind und dadurch am zweiten Ende ein Messer (26b) halten.

14. Schlegelmäher (10b) für einen Buschmäher nach Anspruch 8, bei dem das Kettenantriebssystem (66b) ortsbeweglich und vom Schlegelmulchwerk (10b) abbaubar ist.

15. Verfahren zum Bereitstellen eines Schlegelmähers (10b) für einen Buschmäher, wobei der Schlegelmäher (10b) Messer (26b) hat, welches folgende Schritte aufweist:
a) Bereitstellen eines drehbaren allgemein zylindrischen Elements (16b) mit einer Mehrzahl daran angeordneter erster Aufnahmemittel (18b);
b) Bereitstellen eines Verriegelungsmittels (20b) mit einer Mehrzahl zweiter daran angeordneter Aufnahmemittel (22b), wobei die Mehrzahl zweiter Aufnahmemittel (22b) über der Mehrzahl der ersten Aufnahmemittel (18b) angeordnet ist;
c) Bereitstellen einer Mehrzahl Befestigungsmittel (24b);
d) Befestigen jedes Befestigungsmittels (24b) an einem der ersten und zweiten Aufnahmemittel (18b, 22b);
e) Bereitstellen eines Haltemittels (52b); und
f) lösbares Anbringen jedes der Befestigungsmittel (24b) an einem der Haltemittel (52b), wobei jedes Haltemittel (52b) mindestens ein Messer (26b) hält, so dass jedes Haltemittel (52b) mindestens ein Messer (26b) an jedem der Befestigungsmittel (24b) befestigt.

## Revendications

1. Faucheuse à fléaux (10b) pour une débroussailleuse, la faucheuse à fléaux (10b) comportant des lames (26b) et comprenant:
a) un élément rotatif essentiellement cylindrique (16b) comportant une pluralité de premiers moyens de réception (18b) positionnés sur celui-ci ;
b) des moyens de verrouillage (20b) comportant une pluralité de deuxièmes moyens de réception (22b) positionnés sur ceux-ci, la pluralité de deuxièmes moyens de réception (22b) étant positionnés au-dessus de la pluralité de premiers moyens de réception (18b) ;
c) une pluralité de moyens de fixation (24b), chaque moyen de fixation (24b) étant attaché à l'un des premiers et deuxièmes moyens de réception ; et
d) une pluralité de moyens de support (52b), chaque moyen de support (52b) étant attaché d'une façon détachable à l'un des moyens de fixation (24b), chaque moyen de support (52b) supportant au moins une lame (26b), chaque moyen de support (52b) attachant de ce fait au moins une lame (26b) à chacun des moyens de fixation (24b).

2. Faucheuse à fléaux (10b) pour une débroussailleuse suivant la revendication 1, dans laquelle la pluralité de moyens de fixation (24b) sont des paliers de suspension en forme de U (24b).

3. Faucheuse à fléaux (10b) pour une débroussailleuse suivant la revendication 1 ou la revendication 2, dans laquelle la pluralité de moyens de support (52b) sont des anneaux en forme de C (54b).

4. Faucheuse à fléaux (10b) pour une débroussailleuse suivant l'une quelconque des revendications 1 à 3, dans laquelle la pluralité de premiers moyens de réception (18b) sont des trous ménagés à travers l'élément essentiellement cylindrique (16b).

5. Faucheuse à fléaux (10b) pour une débroussailleuse suivant l'une quelconque des revendications précédentes, dans laquelle la pluralité de deuxièmes moyens de réception (22b) sont des trous ménagés à travers les moyens de verrouillage (20b).

6. Faucheuse à fléaux (10b) pour une débroussailleuse suivant l'une quelconque des revendications précédentes, dans laquelle les moyens de fixation (24b) sont attachés d'une façon détachable aux premiers et deuxièmes moyens de réception (18b, 22b).

7. Faucheuse à fléaux (10b) pour une débroussailleuse suivant l'une quelconque des revendications précédentes, dans laquelle les moyens de verrouillage (20b) sont une gaine coulissante qui glisse sur l'élément essentiellement cylindrique (16b) afin de bloquer en place les lames (26b) attachées à l'élément essentiellement cylindrique (16b).

8. Faucheuse à fléaux (10b) pour une débroussailleuse suivant l'une quelconque des revendications précédentes, dans laquelle l'élément essentiellement cylindrique (16b) est actionné au moyen d'un système d'entraînement par chaîne (66b).

9. Faucheuse à fléaux (10b) pour une débroussailleuse suivant la revendication 4, dans laquelle les trous de la pluralité de premiers moyens de réception (18b) sont essentiellement en forme de L; et dans laquelle les trous en forme de L de la pluralité de premiers moyens de réception (18b) reçoivent les moyens de fixation (24b) dans un engagement amovible.

10. Faucheuse à fléaux (10b) pour une débroussailleuse suivant la revendication 5, dans laquelle les trous de la pluralité de deuxièmes moyens de réception (22b) sont essentiellement en forme de L; et dans laquelle les trous en forme de L de la pluralité de deuxièmes moyens de réception (22b) reçoivent les moyens de fixation (24b) dans un engagement amovible.

11. Faucheuse à fléaux (10b) pour une débroussailleuse suivant l'une quelconque des revendications précédentes, dans laquelle les moyens de fixation (24b) sont des paliers de suspension (34b), chaque palier de suspension (34b) présentant des premières et deuxièmes extrémités, les paliers de suspension (34b) étant chacun attachés d'une façon détachable à l'un des premiers et deuxièmes moyens de réception (18b, 22b) à la première extrémité, les paliers de suspension (34b) étant chacun attachés à l'un des moyens de support (52b) à la deuxième extrémité, supportant ainsi une lame (26b) à la deuxième extrémité.

12. Faucheuse à fléaux (10b) pour une débroussailleuse suivant la revendication 11, dans laquelle les paliers de suspension (34b) sont insérés d'une façon amovible dans les premiers et deuxièmes moyens de réception (18b, 22b); et dans laquelle les moyens de support (52b) ont la forme d'un anneau en forme de C (54b).

13. Faucheuse à fléaux (10b) pour une débroussailleuse suivant l'une quelconque des revendications 1 à 10, dans laquelle les moyens de fixation (24b) sont des paliers de suspension (34b), chaque palier de suspension (34b) présentant des première et deuxième extrémités, les paliers de suspension (34b) étant chacun insérés d'une façon amovible dans l'un des premiers et deuxièmes moyens de réception (18b, 22b) à la première extrémité, les paliers de suspension (34b) étant chacun attachés à l'un des moyens de support (52b) à la deuxième extrémité, supportant ainsi une lame (26b) à la deuxième extrémité.

14. Faucheuse à fléaux (10b) pour une débroussailleuse suivant la revendication 8, dans laquelle le système d'entraînement par chaîne (66b) est transportable et peut être retiré hors de la faucheuse à fléaux (10b).

15. Procédé pour équiper d'une faucheuse à fléaux (10b) une débroussailleuse, la faucheuse à fléaux (10b) comportant des lames (26b), comprenant les étapes consistant à :
a) fournir un élément rotatif essentiellement cylindrique (16b) comportant une pluralité de premiers moyens de réception (18b) positionnés sur celui-ci ;
b) fournir des moyens de verrouillage (20b) comportant une pluralité de deuxièmes moyens de réception (22b) positionnés sur ceux-ci, la pluralité de deuxièmes moyens de verrouillage (22b) étant positionnés sur la pluralité de premiers moyens de réception (18b) ;
c) fournir une pluralité de moyens de fixation (24b) ;
d) attacher chaque moyen de fixation (24b) à l'un des premiers et deuxièmes moyens de réception (18b, 22b) ;
e) fournir des moyens de support (52b) ; et
f) attacher d'une façon détachable chacun des moyens de fixation (24b) à l'un des moyens de support (52b), chaque moyen de support (52b) supportant au moins une lame (26b), chaque moyen de support (52b) attachant de ce fait au moins une lame (26b) sur chacun des moyens de fixation (24b).
